# EUROPÄISCHE PATENTANMELDUNG

(11) **EP 1 065 435 A1**
(43) Veröffentlichungstag der Anmeldung: **03.01.2001**
(21) Anmeldenummer: 99114545.9
(22) Anmeldetag: 23.07.1999
(51) Int. Cl.: F21S 2/00, F21S 6/00, F21S 8/00

(54) **Deckenleuchte mit Lichtleiter**

(30) Priorität: 28.05.1999 DE 19924484
(71) Anmelder: Siteco Beleuchtungstechnik GmbH, 83301 Traunreut (DE)
(72) Erfinder: Belloni, Paola, D-83278 Traunstein (DE); Leibig, Joachim, D-83374 Traunwalchen (DE); Prodell, Peter, D-83308 Trostberg (DE); Weinmann, Ansgar, D-83329 Waging (DE)
(74) Vertreter: Goddar, Heinz J., Dr.

(57) **Zusammenfassung**

Die Erfindung betrifft eine Leuchte zum unmittelbaren Befestigen an einer Decke, insbesondere eine Einbau- oder Anbauleuchte, mit einem Gehäuse (3,70) zum Befestigen an oder in der Decke, das einen Lichtleiter (7,40,73) aufweist, in den von einer oder mehreren Lampen (13,42,50,80) Licht eingekoppelt wird und der eine refraktiv wirkende Lichtauskoppeleinrichtung (11,62a,62b,74) mit einer lichtbrechenden Struktur (24,26) aufweist, welche Licht aus dem Lichtleiter (7,40,73) zum Austritt über eine im Einsatz nach unten weisende Lichtaustrittsfläche auskoppelt, die dadurch gekennzeichnet ist, daß die Lichtauskoppeleinrichtung (11,62a,62b,74) in dem Lichtweg des aus der Lichtaustrittsfläche austretenden Lichts eine Grenzfläche zwischen zwei Medien mit unterschiedlichen Brechungsindizes aufweist, die mit einer lichtbrechenden Struktur (24,26) versehen ist, die zumindest abschnittsweise entsprechend einem Linienmuster (28,30) aus einer oder mehreren Linien (28,30) ausgebildet ist, dessen Linie oder Linien einen oder mehrere längliche lichtbrechende Abschnitte (24a,24b,26a,26b) aufeinander gegenüberliegenden Seiten begrenzen, wobei die lichtbrechende Struktur (24,26), bezogen auf eine Fläche senkrecht zu der oder den Linien (28,30), eine Abschirmung des aus der Grenzfläche austretenden Lichts oberhalb eines Grenzwinkels bezüglich einer Normalen zu der Grenzfläche erzeugt.

## Beschreibung

Die Erfindung betrifft eine Leuchte zum unmittelbaren Befestigen an einer Decke oder dgl., insbesondere eine Einbau- oder Anbauleuchte, gemäß dem Oberbegriff des Anspruchs 1. Eine derartige Leuchte ist beispielsweise aus EP 0 846 915 A1 bekannt. Bei der aus der EP 0 846 915 A1 bekannten Leuchte wurden zum Auskoppeln Prismenstrukturen verwendet, wie sie beispielsweise aus US-PS 5 396 350 und US-PS 5 555 109 bekannt sind. Die dort vorgeschlagene Prismenstruktur besteht aus einem Flächenmuster von Mikroprismen, bei dem die einzelnen Mikroprismen durch ein Gitter von Zwischenräumen voneinander getrennt sind und auf allen vier Seiten begrenzte Punkte auf der Lichtaustrittsfläche bilden. Nachteilig bei diesen Strukturen ist ihre aufwendige Herstellung. Hinzu kommt, daß zum Auskoppeln des Lichts über ein Prisma nur eine relativ kleine Fläche zur Verfügung steht und die Zwischenräume zwischen den Mikroprismen, in denen keine Auskopplung stattfindet, einen relativ großen Flächenbereich einnehmen, so daß sich nur eine geringe Auskoppeleffizienz ergibt. Aufgrund dieser geringen Auskoppeleffizienz war die vorangehend erwähnte Lichtleitertechnik bislang für Einbau- oder Anbauleuchten ohne zusätzliche Maßnahmen zur Lichtabgabe nicht interessant, da die Lichtstärke des aus dem Lichtleiter ausgekoppelten Lichts für Einbauleuchten zu gering war. Aus diesem Grund wurden beispielsweise in der EP 0 846 915 A1 Hilfsreflektoren vorgeschlagen, auf welche die Lampe oder die Lampen direkt Licht einstrahlen und die das auf sie einfallende Licht in konventioneller Weise an dem Lichtleiter vorbei nach unten lenken. Aufgrund dieser Hilfsreflektoren war die Bauhöhe entsprechender Einbauleuchten im wesentlichen dieselbe wie bei konventionellen Einbau- oder Anbauleuchten.

Es ist die Aufgabe der Erfindung, eine Leuchte gemäß dem Oberbegriff des Anspruchs 1 zur Verfügung zu stellen, welche eine effizientere Auskopplung des Lichts aus dem Lichtleiter ermöglicht und welche geringere Bauhöhen zuläßt.

Erfindungsgemäß wird diese Aufgabe gelöst durch eine Leuchte zum unmittelbaren Befestigen an einer Decke, insbesondere eine Einbau- oder Anbauleuchte, mit einem Gehäuse zum Befestigen an oder in der Decke, das einen Lichtleiter aufweist, in den von einer oder mehreren Lampen Licht eingekoppelt wird und der eine refraktiv wirkende Lichtauskoppeleinrichtung mit einer lichtbrechenden Struktur aufweist, welche Licht aus dem Lichtleiter zum Austritt über eine im Einsatz nach unten weisende Lichtaustrittsfläche auskoppelt, welche dadurch gekennzeichnet ist, daß die Lichtauskoppeleinrichtung eine Grenzfläche zwischen zwei Medien mit unterschiedlichen Brechungsindizes aufweist, die mit einer lichtbrechenden Struktur versehen ist, die entsprechend einem vorzugsweise kreuzungsfreien Linienmuster ausgebildet ist, dessen Linie oder Linien einen oder mehrere längliche lichtbrechende Abschnitte auf einander gegenüberliegenden Seiten begrenzen, derart, daß sich in jedem Schnitt entlang einer (nicht notwendig ebenen) Fläche, die senkrecht auf der oder den Linien des Linienmusters steht, mehrere Schnittpunkte der Fläche mit der oder den Linien ergeben, wobei jeweils zwischen zwei Schnittpunkten einer der besagten Abschnitte liegt. Dabei ist die Breite der lichtbrechenden Abschnitte in der Richtung senkrecht zu den Linien kleiner als deren Länge in Richtung der Linien und die lichtbrechende Struktur erzeugt, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche. Vorzugsweise wird dabei in den Flächen parallel zu den Linien im wesentlichen keine Abschirmung oder nur eine Abschirmung bei wesentlich größeren Winkeln erzeugt, so daß die besagte lichtbrechende Struktur im wesentlichen eine Abschirmung des Lichts der Leuchte in einer Richtung bewirkt. Die Abschirmung bewirkt, daß oberhalb des Grenzwinkels die Leuchtdichte unter einen vorgegebenen Grenzwert abfällt, nach der derzeit geltenden deutschen Norm 200 cd/m². Eine geplante europäische Norm sieht unterschiedliche Grade der Abschirmung vor, die durch Leuchtdichtewerte von 200 cd/m², 500 cd/m² und 1000 cd/m² definiert sind. Durch die beschriebene Struktur wird eine Blendungsbegrenzung erreicht, wie sie insbesondere in den genannten Vorschriften für Bildschirmarbeitsplätze gefordert wird.

Erfindungsgemäß sind die lichtbrechenden Abschnitte, anders als bei den bislang, z. B. aus der EP 0 846 915 A1 bekannten Prismen, länglich, d. h. ihre Länge ist deutlich größer als ihre Breite, z. B. mehr als das Dreifache, vorzugsweise mehr als das Zehnfache. Derartige längliche, wellen- oder rippenförmige Strukturen lassen sich wesentlich einfacher herstellen als die bislang verwendeten pyramidenförmigen Strukturen. Sie haben weiterhin den Vorteil, daß die lichtbrechenden Abschnitte einen wesentlich größeren Anteil an der Grenzfläche haben, so daß die Auskoppeleffizienz verbessert wird. Insbesondere kann die lichtbrechende Struktur eine Struktur von lichtbrechenden Abschnitten sein, die entsprechend einem Muster von sich nicht kreuzenden, vorzugsweise parallelen Linien angeordnet sind, welche die lichtbrechenden Abschnitte auf einander gegenüberliegenden Seiten begrenzen. Die Linien, welche die Struktur definieren, sind vorzugsweise parallele gerade Linien. Grundsätzlich sind jedoch auch andere Strukturen denkbar, z.B. eine Struktur, bei der Linien in Form von konzentrischen Kreisen ausgebildet sind oder eine Struktur mit einer einzigen eine Fläche ausfüllenden Linie, z. B. eine Spiralstruktur mit einem spiralförmigen lichtbrechenden Abschnitt.

Gemäß einer bevorzugten Ausführungsform ist vorgesehen, daß die Lichtauskoppeleinrichtung an einer zweiten Grenzfläche zwischen zwei Medien mit unterschiedlichen Brechungsindizes, die in dem Lichtweg von der ersten Grenzfläche zu der besagten Lichtaustrittsfläche liegt, eine zweite lichtbrechende Struktur aufweist, die entsprechend einem Linienmuster, z. B. aus sich nicht kreuzenden, vorzugsweise parallelen Linien angeordnet sind, dessen Linie oder Linien einen oder mehrere längliche lichtbrechende Abschnitte begrenzen, derart, daß sich in jedem Schnitt entlang einer Fläche, die senkrecht auf der oder den Linien des Linienmusters steht, mehrere Schnittpunkte der Fläche mit der oder den Linien ergeben, wobei jeweils zwischen zwei dieser Schnittpunkte einer der besagten Abschnitte liegt. Dabei ist die Breite der lichtbrechenden Abschnitte in der Richtung senkrecht zu den Linien kleiner als deren Länge in Richtung der Linien und die zweite Struktur bewirkt, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche, während in der Richtung parallel zu den Linien im wesentlichen keine Abschirmung oder nur eine Abschirmung bei wesentlich größeren Winkeln erfolgt. Die Linie oder Linien der zweiten Struktur schneiden dabei in einer Projektion auf die Lichtaustrittsfläche die Linie oder Linien der ersten Struktur, so daß sich in der Projektion ein netzförmiges Muster ergibt, derart, daß das aus der Lichtaustrittsfläche der Leuchte austretende Licht zumindest in zwei nicht parallelen Ebenen senkrecht zu der Lichtaustrittsfläche jeweils oberhalb eines Grenzwinkels bezüglich einer Normalen zu der Lichtaustrittsfläche, der für die beiden Ebenen verschieden sein kann, abgeschirmt wird. Vorzugsweise stehen die Linien der ersten und zweiten Struktur in der Projektion senkrecht aufeinander. Die Linien der ersten und/oder zweiten Struktur müssen nicht notwendigerweise gerade sein. Denkbar ist z. B., daß die erste Struktur eine Struktur von konzentrischen Kreisen und die zweite Struktur eine Struktur von Linien ist, die in der Projektion sich im Mittelpunkt der Kreise der anderen Struktur schneiden. Ebenso ist denkbar, daß die erste und zweite Struktur zwei gegenläufige Spiralen bilden.

Vorzugsweise können der oder die lichtlenkenden Abschnitte zwischen linienförmigen Vertiefungen der ersten und/oder zweiten Struktur ausgebildet und in Richtung der Linien im wesentlichen gleichförmig sein und insbesondere Prismen sein. Denkbar ist auch eine Struktur mit einem linsenförmigen Querschnitt senkrecht zu der oder den Linien.

Gemäß einer bevorzugten Ausführungsform ist die erste und/oder zweite Struktur entsprechend einem Muster von geraden parallelen kreuzungsfreien Linien aufgebaut, zwischen denen sich Prismen als lichtbrechende Abschnitte befinden, deren Querschnittsprofil im wesentlichen translationsinvariant bezüglich der Richtung der Linien ist.

Gemäß einer besonderen Ausführungsform ist die erste und/oder zweite Grenzfläche eine Grenzfläche zwischen Luft und einem optisch dichteren zweiten Medium, wobei die Prismen im Querschnitt im wesentlichen symmetrisch sind und der Prismenwinkel w die folgenden Relationen erfüllt:
w/2 ≤ C
w ≥ 2 (2 arcsin(1/n) + 90)/3
tan (w/2) ≤ (n sin(arcsin(1/n) - 3 w/2) + cos(w/2)) / (n cos(arcsin(1/n) - 3 w/2) - sin(w/2)),
wobei n der Brechungsindex des zweiten Mediums an der Grenzfläche und C der Abschirmwinkel der Lichtstärkeverteilung an der Grenzfläche ist.

Der Querschnitt der Prismen hat gemäß einer besonderen Ausführungsform die Form eines Polygonzugs. Vorzugsweise haben die Prismen einen dreieckigen Querschnitt. Sie können jedoch auch gekrümmte Seitenwände und/oder eine flache Stirnfläche anstelle einer scharfen Kante aufweisen. Wichtig ist, daß sie die vorangehend erwähnte Begrenzung des Abstrahlwinkels in der Richtung quer zu den Linien aufgrund von Lichtbrechung bewirken.

Erfindungsgemäß können die erste und zweite Struktur an zwei einander gegenüberliegenden Seiten einer lichtbrechenden Platte ausgebildet sein.

Gemäß einer bevorzugten Ausführungsform der Erfindung ist vorgesehen, daß die Lichtauskoppeleinrichtung zwei oder mehr geschichtete plattenförmige Elemente aufweist, deren Grundflächen parallel zueinander angeordnet sind, wobei die erste Struktur in einer Grundfläche eines ersten plattenförmigen Elementes und die zweite Struktur in einer Grundfläche des zweiten plattenförmigen Elementes ausgebildet ist. Grundsätzlich können auch mehr als zwei geschichtete Platten mit einer lichtbrechenden Struktur vorgesehen sein.

Die beiden Grundflächen mit der ersten bzw. zweiten Struktur weisen gemäß einer besonderen Ausführungsform der Erfindung in die gleiche Richtung, welche die Richtung des Lichtaustritts aus der Lichtauskoppeleinrichtung oder die hierzu entgegengesetzte Richtung sein kann. Die beiden mit der ersten bzw. zweiten Struktur versehenen Grundflächen können jedoch auch direkt aneinander angrenzen. In diesem Fall bilden die beiden Platten eine Einheit mit den beiden strukturierten Grundflächen in der Mitte und vorzugsweise unstrukturierten, also im wesentlichen glatten Grundflächen auf der Außenseite. Schließlich ist es auch möglich, daß die beiden mit Strukturen versehenen Grundflächen jeweils nach außen weisen, so daß die Platten mit den unstrukturierten Grundflächen aneinander angrenzen.

Der oder die Lichtleiter können massive Lichtleiter sein. Bevorzugt ist jedoch, daß zumindest einer der Lichtleiter ein Hohllichtleiter ist, der durch ein Gehäuse mit einem Hohlraum festgelegt ist, dessen Innenwände zumindest zum Teil reflektierend sind, der an einer Seite zumindest teilweise durch die Lichtauskoppeleinrichtung begrenzt ist und der eine der Lichtauskoppeleinrichtung gegenüberliegende Dachfläche aufweist, die nach innen, also zu dem Hohlraum hin, zumindest teilweise reflektierend ist. Die reflektierenden Innenwände können ggf. Licht teilweise durchlassen. Es müssen auch nicht alle Innenwände reflektierend sein. Die Lampen sind vorzugsweise neben dem Hohllichtleiter an einer zu der Lichtaustrittsfläche nicht parallelen Seite desselben, insbesondere an einer an die Lichtaustrittsfläche anschließenden oder zu dieser benachbarten Seite, angeordnet. Insbesondere kann der Hohllichtleiter zumindest an einer Schmalseite zum Einkoppeln von Licht von einer oder mehreren der Lampen eingerichtet sein.

Der Hohlraum kann zu der Lampe hin geschlossen sein und eine Lichteinkoppeleinrichtung zum Einkoppeln von Licht von der Lampe in den Hohlraum aufweisen, im einfachsten Fall eine transparente Wand, z.B. eine Acrylplatte.

Gemäß einer bevorzugten Ausführungsform ist jedoch vorgesehen, daß der Hohllichtleiter zu der oder den Lampen hin offen ist, so daß Licht von den Lampen direkt, also ohne Lichtbrechung, in den Hohlraum gelangen kann.

Die Verwendung eines Hohllichtleiters hat zahlreiche Vorteile. Insbesondere lassen sich die Reflexionseigenschaften in dem Lichtleiter wesentlich einfacher und besser gestalten als bei einem massiven Lichtleiter. Durch eine geeignete Verspiegelung der Dachfläche oder durch eine diffus reflektierende Dachfläche können beispielsweise der Reflexionsgrad erhöht und/oder Mehrfachreflexionen vermieden werden. Während bei einem massiven Lichtleiter das Aufbringen einer unter lichttechnischen Gesichtspunkten befriedigenden lichtbrechenden Struktur zum Auskoppeln aufwendig ist, läßt sich dies bei einem Hohlichtleiter in einfacher Weise dadurch realisieren, daß als Boden ein oder mehrere entsprechend strukturierte Platten eingesetzt werden. Obwohl derzeit zwei derartige Platten bevorzugt sind, können durchaus auch mehr derartige Platten mit unterschiedlichen Strukturen vorgesehen werden, um die Lichtabstrahlcharakteristik zu beeinflussen, insbesondere um den Abstrahlwinkel in verschiedenen Ebenen zu begrenzen. Wenn eine Abschirmung nur in eine Richtung beabsichtigt ist, kann auch nur eine einzige Platte mit einer entsprechenden Strukturierung verwendet werden.

Es hat sich gezeigt, daß die Lichtstärke für kleine Winkel zur Senkrechten vergrößert wird, wenn die Dachfläche ganz oder abschnittsweise diffus reflektierend ausgebildet ist.

Bei Anwendung der erfindungsgemäßen Lehre hat sich gezeigt, daß eine größere Lichtstärke bei kleinen Winkeln zur Senkrechten erreicht werden kann, wenn die Höhe des Hohlraums in einem Schnitt senkrecht zu der Lampenachse sich zumindest in einem Teilabschnitt in der Richtung weg von einer Lampe bzw. den Lampen verringert.

Insbesondere bei Leuchten mit einseitiger Lichteinstrahlung ist es dabei vorteilhaft, wenn die Höhe des Hohlraums, ausgehend von der Lampe bzw. der der Lampe zugewandten Seite, sich in der Richtung von dieser Lampe weg zu einer gegenüberliegenden Seite hin monoton verringert, wobei "monoton verringern" in dem Sinn zu verstehen ist, daß die Höhe sich zumindest abschnittsweise verringert und in den übrigen Abschnitten zumindest konstant bleibt. Bei einer Leuchte mit einer einseitigen Lichteinstrahlung ist es für eine bessere Lichtausnutzung vorteilhaft, wenn eine gegenüberliegende Seitenwand reflektierend ausgebildet ist.

Insbesondere bei Leuchten, bei denen an einander gegenüberliegenden Seiten Lampen angeordnet sind, die Licht in den Hohlleiter einstrahlen, ist es vorteilhaft, wenn die Höhe des Hohlraums in einem Schnitt senkrecht zu der Lampenachse, ausgehend von einer Lampe bzw. der Seite, an der die Lampe Licht einkoppelt, in Richtung zu der gegenüberliegenden Seite hin in einem ersten Teilabschnitt abnimmt und danach in einem zweiten Teilabschnitt zunimmt.

Bevorzugterweise hat dabei die Dachfläche eine im wesentlichen konkave Struktur, d.h. sie bildet zumindest in einem Teilabschnitt eine Vertiefung zwischen den beiden Schmalseiten. Grundsätzlich kann jedoch auch - alternativ oder ergänzend - die Lichtaustrittsfläche im wesentlichen konkav ausgebildet sein, was aus Designgründen vorteilhaft sein kann.

Eine Reihe von Gestaltungsformen haben sich hinsichtlich einer Optimierung der Lichtstärkeverteilungskurve als vorteilhaft herausgestellt. Gemäß einer ersten Klasse von Gestaltungsformen weist der Hohlraum einen Bereich mit im wesentlichen konstanter minimaler Höhe zwischen zwei Seiten, insbesondere zwischen zwei Schmalseiten, auf, der vorzugsweise in der Mitte zwischen den beiden Seiten liegt. Es hat sich herausgestellt, daß sich mit derartigen Hohlraumgestaltungen der Leuchtenbetriebswirkungsgrad deutlich erhöhen läßt.

Dabei kann insbesondere vorgesehen sein, die Dachfläche und/oder die ihr gegenüberliegende Fläche des Hohlraums im Querschnitt die Form eines Polygonzugs aufweist, wobei dieser Polygonzug vorzugsweise, jedoch nicht notwendig einen Bereich mit im wesentlichen konstanter minimaler Höhe zwischen den beiden Seiten, wie vorangehend erwähnt, aufweisen kann. Insbesondere kann vorgesehen sein, daß die Dachfläche zumindest abschnittsweise aus zwei schräg in den Hohlraum des Hohllichtleiters abfallenden Schrägflächen besteht, die unmittelbar aneinander angrenzen.

Gemäß einer weiteren Ausführungsform kann vorgesehen sein, daß die Dachfläche und/oder die ihr gegenüberliegende Fläche im Querschnitt konvex gekrümmte Teilabschnitte aufweist, in denen sich die Höhe in der Richtung von den Seiten zu der Mitte des Hohlraums hin verringert und die vorzugsweise durch einen Abschnitt mit konstanter Höhe oder einen anderen Abschnitt getrennt sind. Die konvexen Teilabschnitte können jedoch auch an ihrem tiefsten Punkt aneinander anschließen, so daß sich eine schwingenförmige Struktur oder Teilstruktur ergibt.

Weiterhin kann vorgesehen sein, daß die Dachfläche und/oder die ihr gegenüberliegende Fläche im Querschnitt ganz oder teilweise konkav gekrümmt ausgebildet ist, wobei vorzugsweise die Dachfläche einen nach innen gewölbten Bogen zwischen den beiden Seiten des Hohllichtleiters bildet. Es kann auch vorgesehen sein, daß die Dachfläche und/oder die ihr gegenüberliegende Fläche, ausgehend von den zwei einander gegenüberliegenden Seiten des Hohllichtleiters, jeweils einen konkav gekrümmten Teilabschnitt aufweist, wobei diese beiden konkav gekrümmten Teilabschnitte an ihrem von der jeweilige Außenseite bzw. Schmalseite des Hohllichtleiters abgewandten Ende durch einen vorzugsweise geraden Zwischenabschnitt verbunden sind.

Gemäß einer besonderen Ausführungsform der Leuchte ist vorgesehen, daß in der Nähe von zwei einander gegenüberliegenden Seiten des Hohllichtleiters, z.B. Schmalseiten, jeweils eine oder mehrere Lampen angeordnet sind, welche über diese Seiten jeweils Licht in den Hohlraum einkoppeln, wobei vorzugsweise die Höhe des Hohlraums in einem Bereich zwischen den Lampen soweit verringert ist, daß eine Direkteinstrahlung einer Lampe auf den Bereich einer gegenüberliegenden Lampe verhindert oder zumindest reduziert wird.

Gemäß einer bevorzugten Ausführungsform ist vorgesehen, daß die Lampe oder die Lampen, welche Licht in den Hohllichtleiter einkoppeln, seitlich neben dem Hohllichtleiter angeordnet sind. Auf diese Weise wird eine sehr flache Bauhöhe erreicht, bei der die Höhe des Gehäuses im wesentlichen durch die Höhe des Hohllichtleiters bestimmt wird. Insbesondere lassen sich auf diese Weise Einbauleuchten mit einem flachen Gehäuse realisieren, das anstelle einer Deckenplatte eingesetzt werden kann. Erfindungsgemäß kann eine Lichteinkopplung in den Hohllichtleiter nur von einer Seite vorgesehen sein, was tendenziell zu einer assymmetrischen Lichtstärkeverteilungskurve führt, oder es kann Licht von zwei einander gegenüberliegenden Seiten eingekoppelt werden, was im Ergebnis zu einer symmetrischen Lichtstärkeverteilungskurve führt.

Alternativ kann auch vorgesehen sein, daß zwei Hohllichtleiter an ein Mittelstück angesetzt sind, in dem eine oder mehrere Lampen angesetzt sind und das seitlich offen ist, so daß das Licht der Lampe bzw. der Lampen in dem Mittelstück jeweils in die beiden seitlich angesetzten Hohllichtleiter eingestrahlt wird. Dabei ist der Raumbereich des Mittelstücks, in dem die Lampe angeordnet ist, vorzugsweise so gestaltet, daß das auf die Dach- und die Bodenwand des Mittelstücks einfallende Licht möglichst vollständig zu den Hohllichtleitern reflektiert wird und/oder es ist ein der Lampe oder den Lampen in dem Mittelstück zugeordneter Reflektor vorhanden, welcher das auf ihn einfallende Licht zu den Hohllichtleitern lenkt.

Weitere Merkmale und Vorteile der Erfindung ergeben sich aus der nachfolgenden Beschreibung von Ausführungsbeispielen der Erfindung anhand der beigefügten Zeichnungen.
- Fig. 1: zeigt schematisch eine perspektivische Ansicht einer erfindungsgemäßen Einbauleuchte,
- Fig. 2: zeigt schematisch einen Querschnitt der Einbauleuchte der Fig. 1,
- Fig. 3: zeigt eine perspektivische Ansicht der beiden rillenförmig strukturierten Prismenplatten zum Auskoppeln von Licht aus dem Lichtleiter,
- Fig. 4: ist eine Schnittansicht der Prismenplatten gemäß Fig. 3 entlang der Linie IV - IV,
- Fig. 5: ist eine Schnittansicht der beiden Prismenplatten gemäß Fig. 3 entlang der Linie V - V,
- Fig. 6: zeigt schematisch die Montage der Einbauleuchte gemäß Fig. 1 in einer Decke,
- Fig. 7: zeigt eine zweite Ausführungsform einer erfindungsgemäßen Einbauleuchte in einem schematischen Querschnitt,
- Fig. 8: zeigt schematisch eine dritte Ausführungsform einer erfindungsgemäßen Einbauleuchte im Querschnitt,
- Fig. 9: zeigt schematisch eine vierte Ausführungsform einer erfindungsgemäßen Einbauleuchte im Querschnitt,
- Fig. 10: zeigt eine perspektivische Ansicht einer erfindungsgemäßen Anbauleuchte,
- Fig. 11: zeigt schematisch eine Querschnittsansicht einer an einer Decke montierten Anbauleuchte gemäß Fig. 10.

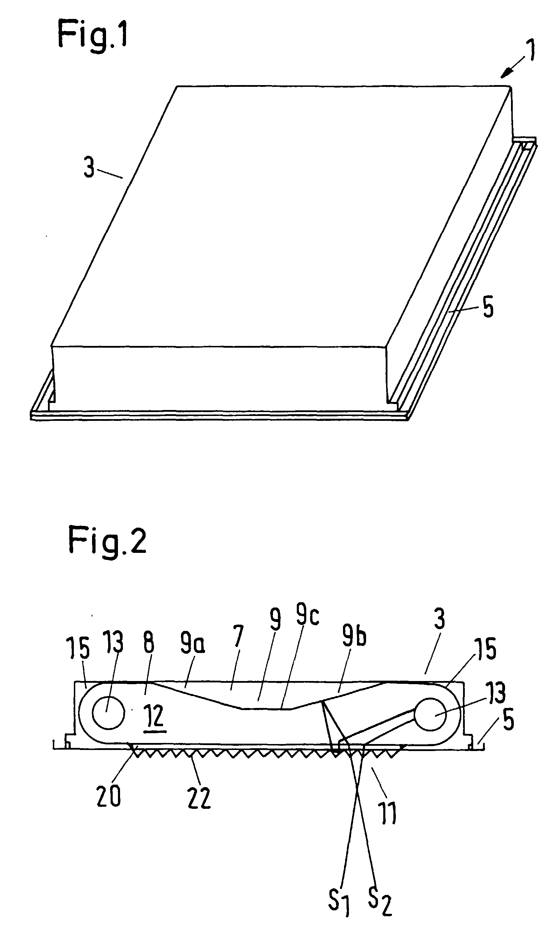

Die in Fig. 1 allgemein mit 1 bezeichnete Einbauleuchte weist ein Gehäuse 3 auf, welches den üblichen Rand 5 zum Anliegen oder Aufliegen an einer Deckenkonstruktion aufweist. In dem Gehäuse 3 ist ein allgemein mit 7 bezeichneter Hohllichtleiter angeordnet, der einen lichtleitenden Hohlraum 8 aufweist und aus einer allgemein mit 9 bezeichneten reflektierenden Dachfläche sowie einer der Dachfläche 9 gegenüberliegenden Lichtauskoppeleinrichtung 11, die nachfolgend noch näher erläutert wird, sowie einer vorderen Abschlußwand (nicht dargestellt) und einer hinteren Abschlußwand 12 aufgebaut ist, die zusammen den Hohlraum 8 festlegen. Die Dachfläche 9 besteht aus zwei schräg nach innen geneigten Abschnitten 9a und 9b und einem zwischen diesen Abschnitten liegenden Abschnitt 9c, der im wesentlichen parallel zu der Lichtauskoppeleinrichtung 11 ist. An den beiden Schmalseiten des Hohllichtleiters ist jeweils eine Leuchtstofflampe 13 angeordnet, welche von einem Reflektor 15 umgeben ist, der das auf ihn einfallende Licht der Lampen 13 in den Hohllichtleiter 7 einkoppelt.

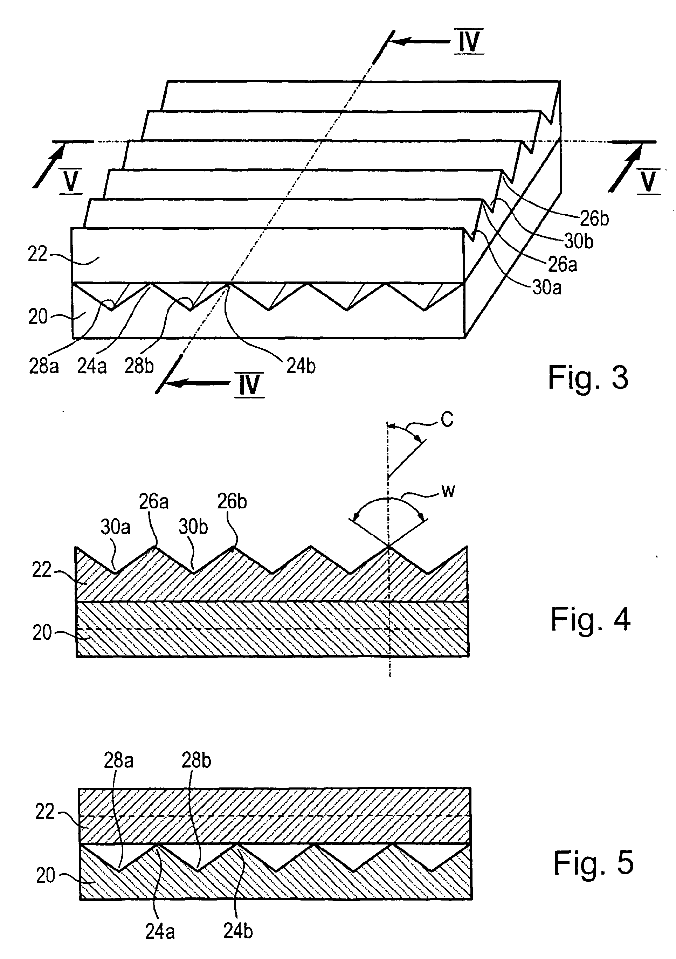

Die Lichtauskoppeleinrichtung 11 ist in den Figuren 3 bis 5 perspektivisch bzw. im Schnitt näher dargestellt. Sie besteht aus zwei Platten 20 und 22, die jeweils an der der Seite des Lichteinfalls gegenüberliegenden Seite eine Prismenstruktur mit satteldachförmigen Prismen 24a, 24b ... bzw. 26a, 26b, ... (nachfolgend kollektiv mit 24 bzw. 26 bezeichnet) versehen sind, die durch gerade rinnenförmige Vertiefungen 28a, 28b ... bzw. 30a, 30b, ... (nachfolgend kollektiv mit 28 bzw. 30 bezeichnet) voneinander getrennt sind. Dabei stehen die Kantenlinien der Prismen 24 bzw. die Vertiefungen 28 senkrecht zu den Kantenlinien der Prismen 26 bzw. den Vertiefungen 30. Der besseren Anschaulichkeit halber sind die Prismenplatten in Fig. 3 bis 5 so dargestellt, daß die Prismen, die im Einsatz nach außen, also zur Lichtaustrittsseite hin liegen, nach oben gerichtet dargestellt sind. Die Breite der Prismen beträgt gemäß den derzeit bevorzugten Ausführungsformen ca. 0,01 mm bis 40 mm, bevorzugt 0,05 mm bis 10 mm und besonders bevorzugt 0,1 mm bis 5 mm. Die Platten 20 und 22 bestehen aus einem leicht bearbeitbaren lichtdurchlässigem Material, z.B. Acrylglas oder Polycarbonat.

Die Prismenstrukturen der Platten 20 bzw. 22 legen jeweils den Abschirmwinkel der Leuchte in der Ebene senkrecht zu den Kantenlinien der Prismen 24 bzw. 26 bzw. den Vertiefungen dazwischen fest. Dabei bestehen zwischen dem Prismenwinkel w und dem Abschirmwinkel C in der Ebene senkrecht zu den Kantenlinien der Prismen (vgl. Fig. 4), wenn der Hohlraum 8 mit Luft gefüllt ist, die folgenden Relationen:
w/2 ≤ C
w ≥ 2 (2 arcsin(1/n) + 90)/3
tan (w/2) ≤ (n sin(arcsin(1/n) - 3 w/2) + cos(w/2)) / (n cos(arcsin(1/n) - 3 w/2) - sin(w/2)),
wobei n der Brechungsindex der Platte 20 bzw. 22 ist. Aufgrund der senkrecht zueinanderstehenden Prismenstrukturen ergibt sich eine Entblendung sowohl in Längs- als auch in Querrichtung, wobei der Abschirmwinkel C für die beiden Richtungen durch eine geeignete Wahl des Prismenwinkels w unterschiedlich für die beiden Prismenstrukturen 24 und 26 gewählt werden kann.

Anstelle von orthogonalen rillenförmigen Prismenstrukturen sind auch andere linienförmige Prismenstrukturen mit orthogonal aufeinanderstehenden Linien denkbar, z.B. kreisförmige Rillen bzw. Prismen in einer Struktur und sternförmig von dem Kreiszentrum ausgehenden Rillen mit dazwischenliegenden Prismen in der anderen Struktur, die auf allen Kreisrillen senkrecht stehen. Die Orientierung der Prismenstrukturen 24 und 26 kann von der in den Figuren 3 bis 5 dargestellten Orientierung abweichen. Die beiden Prismenstrukturen können beispielsweise direkt aneinander angrenzen oder jeweils nach außen weisen. Wenn beide Prismenstrukturen in die gleiche Richtung weisen, kann diese Richtung auch entgegengesetzt zu der vorangehend beschriebenen Richtung, d.h. entgegengesetzt zu der Richtung des Lichtaustritts aus der Lichtauskoppeleinrichtung sein.

Die Wirkungsweise des Hohllichtleiters ist in Fig. 2 anhand beispielhafter Strahlengänge illustriert. Für einen Teil der Lichtstrahlen (vgl. Lichtstrahl S1) wird das direkt auf die Lichtauskoppeleinrichtung 11 einfallende Licht über die Prismen 24 und 26 direkt ausgekoppelt. Für einen weiteren Teil des Lichts (vgl. Strahl S2) wird das Licht an der Prismenstruktur in den Hohlraum 8 zurückreflektiert, anschließend an der Dachfläche 9 reflektiert und gelangt dann wieder mit einem geeigneten Einfallswinkel zu der Lichtauskoppeleinrichtung 11, wo es durch die Prismenstrukturen 24 und 26 ausgekoppelt wird.

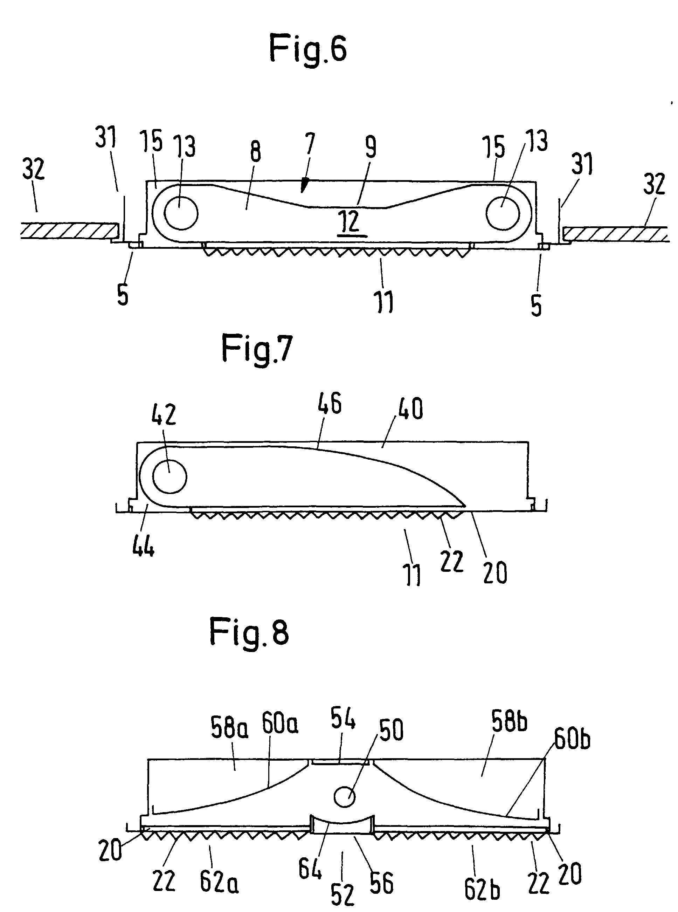

Fig. 6 zeigt schematisch die Montage der Einbauleuchte gemäß Fig. 1 an einer Deckenkonstruktion mit T-Trägern 31 und Deckenplatten 32. Fig. 6 zeigt, daß die Leuchte 1 anstelle einer Deckenplatte 32 eingesetzt wird, wobei ihr Rand 5 von unten den T-Träger 31 teilweise übergreift. Die Leuchte 1 wird durch geeignete Befestigungsmittel (nicht dargestellt), wie sie auf dem Gebiet der Einbauleuchten geläufig sind, an der Deckenkonstruktion gehalten.

Fig. 7 zeigt eine Abwandlung der Leuchte gemäß Fig. 1 und 2, bei der in einen Hohllichtleiter 40 nur von einer Seite von einer Lampe 42 mit einem zugeordneten Reflektor 44 Licht eingestrahlt wird. Der Hohllichtleiter 40 weist wieder eine Lichtauskoppeleinrichtung 11, bestehend aus Platten 20 und 22, wie vorangehend beschrieben, auf. Die Dachfläche 46 des Hohllichtleiters ist jedoch, ausgehend von der Schmalseite, der die Lampe 42 zugeordnet ist, nach unten gekrümmt und schließt an dem von der Lampe 42 abgewandten Ende in einem spitzen Winkel an die Lichtauskoppeleinrichtung 11 an, so daß sich insgesamt eine zu diesem Ende verjüngende Form mit einem teilweise konvexen Querschnitt des gesamten Hohllichtleiters ergibt. Mit der in Fig. 7 dargestellten Leuchte läßt sich eine asymmetrische Lichtstärkeverteilungskurve erreichen, bei der der Hauptanteil des nach unten abgegebenen Lichts in einem Winkelbereich von 0° bis 90° zu der Vertikalen liegt. Anstelle des in Fig. 7 dargestellten Hohllichtleiters 40 können auch Hohllichtleiter mit anderen Querschnittsformen, insbesondere mit anderen Formen oder Anordnungen der Dachfläche und/oder der der Dachfläche gegenüberliegenden Fläche, verwendet werden, bei denen die Höhe des Hohlraums, ausgehend von der Seite der Lampe 42, monoton abnimmt. Insbesondere können auch die Prismenplatten 20 und 22 geneigt angeordnet und/oder gekrümmt ausgebildet sein.

In Fig. 8 ist eine dritte Ausführungsform einer erfindungsgemäßen Einbauleuchte dargestellt, bei der eine Lampe 50 in einem Mittelstück 52 mit einer reflektierenden Dachfläche 54 und einer Bodenfläche 56 angeordnet ist, wobei sich zu beiden Seiten des Mittelstücks 52 ein Hohllichtleiter 58a bzw. 58b mit einer nach unten abfallenden Dachfläche 60a bzw. 60b und einer der Dachfläche gegenüberstehenden Lichtauskoppeleinrichtung 62a bzw. 62b erstreckt, welche die vorangehend erwähnten Prismenplatten 20 und 22 aufweist. Die Lampe 50 koppelt in die beiden Hohllichtleiter 58a und 58b über deren offene Enden Licht ein, so daß gewissermaßen eine Anordnung ähnlich Fig. 7 dupliziert wird. Ein unterhalb der Lampe 50 angeordneter Reflektor 64 bewirkt, daß das von der Lampe 50 direkt nach unten abgestrahlte Licht in die beiden Hohllichtleiter 58a und 58b gelenkt wird.

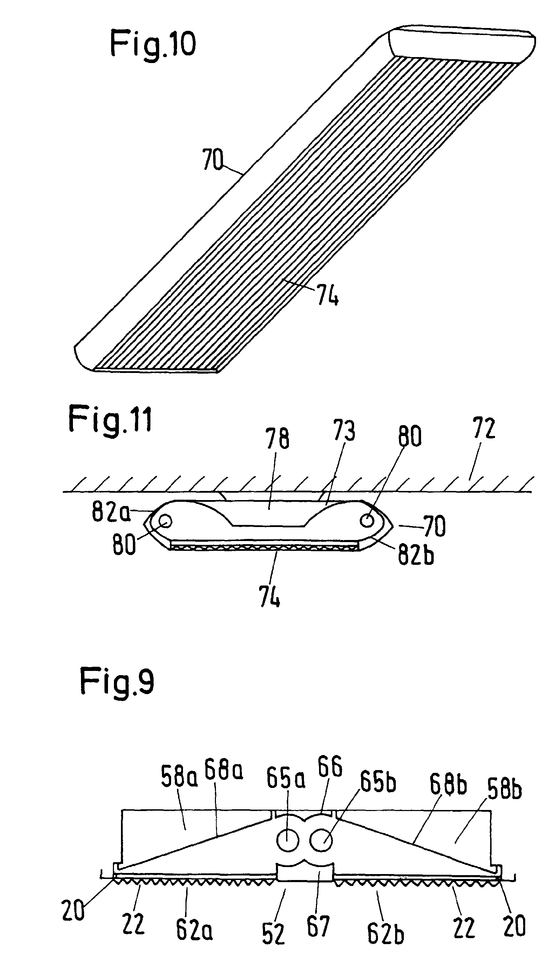

Figur 9 zeigt eine zweilampige Abwandlung der Einbauleuchte gemäß Figur 8. Gleiche Bauelemente wie in Figur 8 sind mit den gleichen Bezugszeichen versehen und werden nicht noch einmal beschrieben. Zwei Lampen 65a und 65b sind zwischen einem oberen Reflektor 66, welcher der reflektierenden Dachfläche 54 bei der Ausführungsform gemäß Figur 8 entspricht, und einem unteren Reflektor 67, welcher dem Reflektor 64 der Ausführungsform gemäß Figur 8 entspricht, angeordnet. An die Reflektoren 66 schließt sich auf beiden Seiten eine schräg nach unten verlaufende, im wesentlichen gerade, reflektierende Dachfläche 68a bzw. 68b an, welche den Hohllichtleiter 58a bzw. 58b auf der Oberseite begrenzt. Die Dachflächen 68a und 68b schließen in einem spitzen Winkel an die jeweilige Lichtauskoppeleinrichtung 62a bzw. 62b an. Die gerade Form dieser Dachflächen 68a und 68b ist nur beispielhaft. Diese können auch, wie in Figur 7 dargestellt, konkav gekrümmt sein oder auch, was nicht dargestellt ist, eine (von außen gesehen) konvexe Form haben, d.h. nach außen gewölbt sein. Die Reflektoren 66 und 67 haben eine näherungsweise Evolventenform, um zu verhindern, daß Licht in den Bereich zwischen den Lampen 65a und 65 reflektiert wird. Im übrigen sind sie so ausgebildet, daß das auf sie einfallende Licht im wesentlichen vollständig in die Hohllichtleiter 58a bzw. 58b reflektiert wird. Während gemäß der Darstellung der Figur 9 der Bereich zwischen den Lampen 65a und 65b frei bleibt, kann in diesem Bereich auch eine Reflektorscheibe oder dergleichen vorgesehen sein, welche die beiden Lampen voneinander trennt, so daß sich im Ergebnis eine Verdoppelung einer Leuchte mit einseitiger Einstrahlung, wie sie in Figur 7 dargestellt ist, ergibt.

In Fig. 10 und 11 ist eine Ausführungsform der erfindungsgemäßen Leuchte als Anbauleuchte dargestellt, die ein Gehäuse 70 zum Befestigen an einer Decke 72 aufweist. In dem Gehäuse 70 ist wieder ein Hohllichtleiter 73 vorgesehen, der aus einer Lichtauskoppeleinrichtung 74, einem konkav nach innen vertieften Dachreflektor 78 sowie Abschlußwänden auf der Vorder- und Rückseite besteht und in den von Lampen 80 Licht eingestrahlt wird. Die Lampen 80 sind jeweils am äußeren seitlichen Rand des Hohllichtleiters 73 angeordnet. Ihnen sind wieder, wie bei dem Ausführungsbeispiel gemäß Fig. 1 und 2, Reflektoren 82a, b zugeordnet, die das auf sie einfallende Licht der Lampe 80 in den Hohllichtleiter 73 einkoppeln. Lichttechnisch entspricht dieses Ausführungsbeispiel dem Ausführungsbeispiel gemäß Fig. 1, auf das insoweit verwiesen wird. Anders ist lediglich die Art des Gehäuses und die Befestigung an der Decke. Selbstverständlich können auch die anderen vorangehend mit Bezug auf eine Einbauleuchte beschriebenen Ausführungsformen für eine Anbauleuchte verwendet werden.

Zahlreiche Abwandlungen der vorangehend beschriebenen Ausführungsformen sind möglich. Insbesondere kann nur eine einzige Prismenplatte verwendet werden oder es können auch mehr als zwei Prismenplatten eingesetzt werden. Während in der vorangehenden Beschreibung von Ausführungsbeispielen der Erfindung die den Lampen zugeordneten Reflektoren als eigenständige Teile beschrieben wurden, können erfindungsgemäß diese Reflektoren auch einstückig mit dem Gehäuse des Hohllichtleiters, insbesondere mit seiner Dachfläche ausgebildet sein. In diesem Fall kann z.B. die untere Hälfte der Einheit, welche dann gleichzeitig den Hohllichtleiter und die Reflektoren bildet, abnehmbar sein, um Zugang zu den Lampen zu erhalten. Während bei den vorangehend beschriebenen Ausführungsformen der Hohllichtleiter, insbesondere dessen reflektierende Elemente, insgesamt noch einmal von einem Gehäuse umgeben waren, kann dieses umhüllende Gehäuse ganz oder teilweise wegfallen. Insbesondere kann beispielsweise bei dem Ausführungsbeispiel der Figur 1 eine separate Dachwand des Gehäuses 3 entfallen, so daß die Dachwand des Gehäuses durch die Dachfläche 9 mit den Abschnitten 9a, 9c und 9b, gegebenenfalls zusammen mit Teilen der Reflektoren 15, gebildet wird. In diesem Fall hat die Dachfläche 9 gleichzeitig die Funktion einer Begrenzung des Hohllichtleiters als auch die einer Begrenzung des Gehäuses 3 insgesamt. Während bei den vorangehend beschriebenen Ausführungsformen die reflektierende Dachfläche des Hohllichtleiters gekrümmt oder abgeschrägt war oder aus mehreren unterschiedlich geneigten oder gekrümmten Teilen bestand, kann diese reflektierende Dachfläche grundsätzlich auch aus einer ebenen Fläche, im wesentlichen parallel zu den das Licht auskoppelnden Prismenplatten, bestehen.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Einbauleuchte
- 3: Gehäuse
- 5: Rand
- 7: Hohllichtleiter
- 8: Hohlraum
- 9: Dachfläche
- 9a, 9b, 9c: Dachabschnitte
- 11: Lichtauskoppeleinrichtung
- 12: Abschlußwand
- 13: Leuchtstofflampe
- 15: Reflektor
- 20: Platte
- 22: Platte
- 24a, 24b: Prismen
- 26a, 26b: Prismen
- 28a, 28b ...: rinnenförmige Vertiefungen
- 30a, 30b ...: rinnenförmige Vertiefungen
- 31: T-Träger
- 32: Deckenplatte
- 40: Hohllichtleiter
- 42: Lampe
- 44: Reflektor
- 46: Dachfläche
- 50: Lampe
- 52: Mittelstück
- 54: Dachfläche
- 56: Bodenfläche
- 58a, 58b: Hohllichtleiter
- 60a, 60b: Dachfläche
- 62a, 62b: Lichtauskoppeleinrichtung
- 64: Reflektor
- 65a, 65b: Lampe
- 66: Reflektor
- 67: Reflektor
- 68a, 68b: Dachfläche
- 70: Gehäuse
- 72: Decke
- 73: Hohllichtleiter
- 74: Lichtauskoppeleinrichtung
- 78: Dachreflektor
- 80: Lampe
- 82a, 82b: Reflektorabschnitt

## Patentansprüche

1. Leuchte zum unmittelbaren Befestigen an einer Decke, insbesondere Einbau- oder Anbauleuchte, mit einem Gehäuse (3; 70) zum Befestigen an oder in der Decke, das einen Lichtleiter (7; 40; 73) aufweist, in den von einer oder mehreren Lampen (13; 42; 50; 80) Licht eingekoppelt wird und der eine refraktiv wirkende Lichtauskoppeleinrichtung (11; 62a, 62b; 74) mit einer lichtbrechenden Struktur (24, 26) aufweist, welche Licht aus dem Lichtleiter zum Austritt über eine im Einsatz nach unten weisende Lichtaustrittsfläche auskoppelt, dadurch gekennzeichnet, daß die Lichtauskoppeleinrichtung (11; 62a, 62b; 74) in dem Lichtweg des aus der Lichtaustrittsfläche austretenden Lichts eine Grenzfläche zwischen zwei Medien mit unterschiedlichen Brechungsindizes aufweist, die mit einer lichtbrechenden Struktur (24, 26) versehen ist, die zumindest abschnittsweise entsprechend einem Linienmuster (28, 30) aus einer oder mehreren Linien ausgebildet ist, dessen Linie oder Linien (28, 30) einen oder mehrere längliche lichtbrechende Abschnitte (24a, 24b; 26a, 26b) auf einander gegenüberliegenden Seiten begrenzen, wobei die lichtbrechende Struktur, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche erzeugt.

2. Leuchte nach Anspruch 1, dadurch gekennzeichnet, daß die Lichtauskoppeleinrichtung an einer zweiten Grenzfläche zwischen zwei Medien mit unterschiedlichen Brechungsindizes, die in dem Lichtweg des aus der Lichtaustrittsfläche austretenden Lichts nach der ersten Grenzfläche liegt, eine zweite lichtbrechende Struktur aufweist, die zumindest abschnittsweise entsprechend einem Linienmuster aus einer oder mehreren Linien ausgebildet ist, dessen Linie oder Linien (30) einen oder mehrere längliche lichtbrechende Abschnitte (26a, 26b) auf einander gegenüberliegenden Seiten begrenzen, wobei die zweite Struktur, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche erzeugt und wobei die Linien der zweiten Struktur relativ zu den Linien der ersten Struktur so angeordnet sind, daß das aus der Lichtaustrittsfläche der Leuchte austretende Licht zumindest in zwei nicht parallelen Ebenen senkrecht zu der Lichtaustrittsfläche jeweils oberhalb eines Grenzwinkels bezüglich einer Normalen zu der Lichtaustrittsfläche abgeschirmt wird.

3. Leuchte nach einem der Ansprüche 1 oder 2, dadurch gekennzeichnet, daß die lichtlenkenden Abschnitte Prismen (24, 26) sind.

4. Leuchte nach Anspruch 3, dadurch gekennzeichnet, daß die erste und/oder zweite Struktur entsprechend einem Muster von geraden parallelen kreuzungsfreien Linien (28a, 28b, 30a, 30b) aufgebaut ist, zwischen denen sich Prismen (24a, 24b, 26a, 26b) als lichtbrechende Abschnitte befinden, deren Querschnittsprofil im wesentlichen translationsinvariant bezüglich der Richtung der Linien ist.

5. Leuchte nach einem der Ansprüche 2 bis 4, dadurch gekennzeichnet, daß die Lichtauskoppeleinrichtung zwei oder mehr geschichtete plattenförmige Elemente (20, 22) aufweist, deren Grundflächen parallel zueinander angeordnet sind, wobei die erste Struktur in einer Grundfläche eines ersten plattenförmigen Elements und die zweite Struktur in einer Grundfläche eines zweiten plattenförmigen Elements ausgebildet ist.

6. Leuchte nach einem der Ansprüche 1 bis 5, dadurch gekennzeichnet, daß die Lampe oder die Lampen (13; 42; 80) seitlich neben dem Lichtleiter angeordnet sind.

7. Leuchte nach einem der Ansprüche 1 bis 6, dadurch gekennzeichnet, daß eine oder mehrere Lampen (50) in einem Raumbereich (52) zwischen zwei nebeneinander liegenden Lichtleitern (58a, 58b) angeordnet sind, welche jeweils Licht in einen der beiden Lichtleiter (58a, 58b) oder in beide Lichtleiter einkoppeln.

8. Leuchte nach einem der Ansprüche 1 bis 7, dadurch gekennzeichnet, daß zumindest einer der Lichtleiter ein Hohllichtleiter (7; 40; 58a, 58b; 73) ist, der durch ein Gehäuse mit einem Hohlraum mit reflektierenden Wänden festgelegt ist, an einer Seite zumindest teilweise durch die Lichtauskoppeleinrichtung (11; 62a, 62b; 74) begrenzt ist und eine der Lichtauskoppeleinrichtung gegenüberliegende Dachfläche (9; 46; 60a, 60b; 78) aufweist, die zu dem Hohlraum hin reflektierend ist.

9. Leuchte nach Anspruch 8, dadurch gekennzeichnet, daß der Hohllichtleiter (7; 40; 58a, 58b) zumindest an einer Schmalseite zum Einkoppeln von Licht von einer oder mehreren der Lampen (3; 42; 50; 80) eingerichtet ist.

10. Leuchte nach einem der Ansprüche 8 oder 9, dadurch gekennzeichnet, daß die Höhe des Hohlraums des Hohllichtleiters in einem Schnitt senkrecht zu der Lampenachse einer dem Lichtleiter (7; 40; 58a, 58b; 73) zugeordneten Lampe (13; 42; 50; 80) sich zumindest in einem Teilabschnitt in der Richtung weg von dieser Lampe (13; 42; 50; 80) verringert.

11. Leuchte nach Anspruch 10, dadurch gekennzeichnet, daß die Höhe des Hohlraums, ausgehend von dem Einkoppelbereich einer Lampe (42), über die Licht in den Hohlraum eingekoppelt wird, sich in der Richtung von diesem Bereich weg zu einer gegenüberliegenden Seite hin monoton verringert.

12. Leuchte nach Anspruch 10, dadurch gekennzeichnet, daß die Höhe des Hohlraums, ausgehend von dem Einkoppelbereich einer Lampe (13; 80) in Richtung zu einer gegenüberliegenden Seite hin in einem ersten Teilabschnitt (9a) abnimmt und danach in einem zweiten Teilabschnitt (9b) zunimmt.

13. Leuchte nach Anspruch 12, dadurch gekennzeichnet, daß in der Nähe von zwei einander gegenüberliegenden Seiten des Hohllichtleiters jeweils eine oder mehrere Lampen (13) angeordnet sind, welche jeweils Licht in den Hohlraum des Hohllichtleiters einkoppeln und daß die Höhe des Hohlraums in einem Bereich (9c) zwischen den Lampen (13) soweit verringert ist, daß eine Direkteinstrahlung einer Lampe (13) auf den Einkoppelbereich einer gegenüberliegenden Lampe (13) verhindert oder zumindest reduziert wird.

14. Leuchte nach einem der Ansprüche 8 bis 13, dadurch gekennzeichnet, daß die Höhe des Gehäuses (3; 70) ungefähr gleich der maximalen Höhe des Hohllichtleiters ist.
